# FASCICULE DE BREVET EUROPEEN

(11) **EP 3 615 385 B1**
(45) Date de publication et mention de la délivrance du brevet: **17.02.2021**
(21) Numéro de dépôt: 18724943.8
(22) Date de dépôt: 09.04.2018
(51) Int. Cl.: B60R 19/48, B60R 21/34, B60R 13/00, G01S 13/93

(54) **DISPOSITIF DE DÉTECTION OU DE COMMUNICATION ARTICULÉ ET VÉHICULE CORRESPONDANT**
GELENKIGE DETEKTIONS- ODER KOMMUNIKATIONSVORRICHTUNG UND ZUGEHÖRIGES FAHRZEUG
ARTICULATED DETECTION OR COMMUNICATION DEVICE AND CORRESPONDING VEHICLE

(30) Priorité: 24.04.2017 FR 1753528
(43) Date de publication de la demande: 04.03.2020
(73) Titulaire: RENAULT s.a.s., 92100 Boulogne-Billancourt (FR)
(72) Inventeur: DABROWSKI, Laurent, 78460 Chevreuse (FR); LACASSAGNE, Laurent, 78460 Chevreuse (FR)
(86) Numéro de dépôt international: PCT/FR2018/050889
(87) Numéro de publication internationale: WO 2018/197773

(56) Documents cités:
- WO-A1-2016/193635
- DE-A1-102005 037 151
- DE-A1-102011 103 250
- DE-A1-102015 119 269
- GB-A- 2 493 909
- JP-A- 2002 357 653
- JP-A- 2007 030 535

## Description

### 1. Domaine de l'invention

L'invention concerne un dispositif de détection ou de communication pour véhicule automobile et un véhicule correspondant.

### 2. Art antérieur

Les véhicules modernes sont équipés de dispositifs de détection ou de communication ajoutant des prestations de sécurité et de confort d'utilisation telles qu'une régulation de vitesse associée à une régulation de distance, un freinage d'urgence, un évitement de collision ou un guidage par géolocalisation. Ces dispositifs reposent sur une émission et/ou une réception de signaux et en particulier d'ondes électromagnétiques.

Dans un véhicule, les parties métalliques, telles que la carrosserie ou la structure, atténuent fortement les ondes électromagnétiques. Par conséquent, les dispositifs de détection ou de communication, ne pouvant émettre et recevoir correctement des signaux à travers la carrosserie, possèdent des antennes situées à l'extérieur de la carrosserie, dans une ouverture de la carrosserie ou derrière un cache spécifiquement conçu pour être transparent à la longueur d'onde utilisée. Une telle intégration des antennes est pénalisante pour l'esthétique du véhicule aussi la taille des zones ou des ouvertures dédiées aux antennes est-elle minimisée. Ce dernier point, couplé au fait que les faisceaux d'ondes présentent une forme conique, implique de positionner les antennes à proximité de la carrosserie à traverser.

Cependant, un tel positionnement des dispositifs de détection ou de communication présente l'inconvénient de créer un point dur à proximité de la carrosserie. Or la carrosserie est conçue pour se déformer lors d'un impact ou d'un choc afin d'en absorber l'énergie et d'amortir le choc. Par conséquent, le dispositif de détection ou de communication formant un point dur risque de blesser un piéton en cas de choc. Pour prévenir ce risque, certains véhicules comportent des dispositifs de détection ou de communication escamotables sous un effort prédéterminé. Le caractère escamotable est obtenu en dimensionnant la fixation du dispositif pour que cette dernière se rompe sous l'effort prédéterminé ce qui présente plusieurs inconvénients.

Ainsi, le document JP3741993A divulgue une suspension formée sur un boîtier de dispositif radar, et montée sur un support fixé à une carrosserie de véhicule au moyen d'un boulon et d'un écrou de résine permettant un déplacement du support. La résine permet un verrouillage de l'écrou par engagement dans un trou de verrouillage du support.

Un inconvénient réside dans le fait que l'effort nécessaire pour rompre la fixation varie en fonction de l'ancienneté des matériaux et de la température. Un autre inconvénient réside dans le fait que les points de ruptures introduisent nécessairement une faiblesse dans la structure en limitant la rigidité de la fixation. Enfin, dans l'hypothèse où la fixation présente plusieurs points de rupture, ces derniers peuvent ne pas céder tous en même temps et ainsi compromettre un escamotage franc du dispositif de détection ou de communication. Outre le fait de ne pas supprimer le point dur en cas de choc avec le piéton, l'absence d'escamotage franc complique la détection de mise en défaut du dispositif.

Le document WO2016/193635A1, qui correspond au préambule de la revendication 1, divulgue un support pour radar de véhicule comprenant un élément d'accueil et un élément principal en deux parties, une première partie coopérant avec l'élément d'accueil situé à l'avant du véhicule, et une seconde partie coopérant avec le radar. Les deux parties sont réunies par une patte rétractable comportant une ligne de pliage.

### 3. Objectifs de l'invention

L'invention propose une solution visant à améliorer les solutions antérieurement connues. Un objectif de l'invention est de permettre un escamotage contrôlé d'un dispositif de détection ou de communication qui ne dépende ni du vieillissement ni de la température. Un autre objectif est de garantir une fixation robuste du dispositif de détection ou de communication présentant une raideur suffisante. L'invention propose également une solution permettant un escamotage franc du dispositif de détection ou de communication.

### 4. Résumé de l'invention

L'invention concerne un dispositif de détection ou de communication selon la revendication 1. Par dispositif de détection ou de communication on entend un dispositif émettant et/ou réceptionnant des signaux tels que des ondes électromagnétiques, par exemple un radar ou plus généralement un dispositif de communication muni d'une antenne comme un système de positionnement par satellite.

On entend par bras un élément supportant le boîtier électronique à distance de la caisse. Selon des variantes, le bras comporte un seul montant ou deux montants latéraux reliés entre eux par une ou plusieurs traverses ou trois montants ou plus reliés entre eux par une ou plusieurs traverses.

Par espace dédié à l'émission et à la réception de signaux de détection ou de communication, on entend une zone du véhicule dans laquelle le boîtier électronique émet et reçoit des signaux sans obstacle ou à travers un élément transparent à la longueur d'onde des signaux.

Par déformable élastiquement on entend capable de se déformer sous l'effet d'un effort mécanique dans son domaine d'élasticité autour d'une forme au repos pour reprendre la forme au repos une fois libéré de l'effort mécanique, à l'instar d'un ressort.

Un dispositif de détection ou de communication muni d'un tel système d'articulation permet le passage de manière réversible et contrôlée du boîtier électronique de la position déployée à la position escamotée. En particulier, l'exploitation de la déformation du moyen de retenue dans son domaine d'élasticité permet de limiter la variabilité du comportement du dispositif en fonction du vieillissement ou de la température. Selon des variantes :
- le moyen de retenue adopte la forme au repos dans l'état bloqué et dans l'état libre et s'écarte de la forme au repos lors du passage entre l'état libre et l'état bloqué ; ou
- le moyen de retenue adopte la forme au repos dans l'un des deux états bloqué ou libre et s'écarte de la forme au repos dans l'autre état.

Selon une réalisation particulière de l'invention, dans l'état libre, le boîtier passe promptement de l'état déployé à l'état escamoté.
Selon une réalisation particulière de l'invention, le moyen de retenue passe de l'état bloqué à l'état libre sous l'effet d'un effort prédéterminé.
Selon une réalisation particulière de l'invention, une fois le boîtier en position escamotée, le système d'articulation est apte à être réarmé de manière à replacer le boîtier en position déployée, le changement entre la position escamotée et la position déployée n'altérant pas le dispositif.

Selon une réalisation particulière de l'invention, l'au moins un bras comporte deux montants latéraux reliés entre eux par au moins une traverse. Une telle articulation permet de conférer une raideur au dispositif limitant les mouvements autres que le déplacement entre la position déployée et la position rétractée tout en limitant le dimensionnement des bras.

Conformément à l'invention, la deuxième extrémité du bras est montée mobile en rotation sur la caisse. Une telle articulation entre le bras et la caisse permet un déplacement franc entre la position déployée et la position escamotée lorsque le moyen de retenue est dans l'état libre. En particulier lorsqu'une rotation autour d'un axe horizontal est permise et dans le cas où le boîtier bascule vers le bas, le boîtier électronique tombe en position escamotée sous l'effet de son poids. Un déplacement franc entre la position déployée et la position escamotée contribue à garantir une mise en défaut du dispositif de détection ou de communication dans la position escamotée. En variantes, lorsqu'une rotation autour d'un axe horizontal est permise, le boîtier peut basculer vers le haut ou lorsqu'une rotation autour d'un axe vertical est permise, le boîtier peut basculer vers la droite ou vers la gauche.

Conformément à l'invention, le système d'articulation comporte deux bras, les premières extrémités des deux bras étant articulées respectivement en deux points distants du boîtier électronique et les deuxièmes extrémités des deux bras étant articulées respectivement en deux points distants de la caisse. Un tel système d'articulation à deux bras permet de conférer une raideur importante au dispositif de détection ou de communication tout en limitant le dimensionnement de chaque bras.

Selon une réalisation de l'invention, le dispositif d'articulation est de type à parallélogramme ou trapézoïdal en position déployée, le boîtier électronique et la caisse s'étendant respectivement dans des directions sensiblement parallèles matérialisant deux côtés du parallélogramme ou du trapèze, les deux bras matérialisant les deux autres côtés. Un tel dispositif d'articulation permet un mouvement de translation circulaire du boîtier électronique entre la position déployée et la position escamotée de sorte à conserver l'orientation du dispositif tout au long de la trajectoire.

Selon une réalisation particulière de l'invention, le dispositif d'articulation en position escamotée comporte une extrémité du bras proche du boîtier électronique amenée contre le boîtier de façon à amener le boîtier électronique à proximité d'une extrémité du bras proche de la caisse.

Selon une réalisation, chaque bras s'étend en largeur de part et d'autre du boîtier électronique perpendiculairement au plan du parallélogramme ou du trapèze. On entend par largeur la direction perpendiculaire au plan du parallélogramme ou du trapèze. Une telle articulation permet de conférer une raideur au dispositif limitant les mouvements autres que le déplacement entre la position déployée et la position rétractée tout en limitant le dimensionnement des bras. En particulier, les bras peuvent contenir des portions creuses.

Selon une réalisation de l'invention, le système d'articulation comporte en outre un support par l'intermédiaire duquel la deuxième extrémité du bras est montée mobile sur la caisse. Le support est fixé de manière rigide sur la caisse. Le support permet un montage du dispositif de détection ou de communication simple et robuste sur la caisse du véhicule.

Selon une réalisation de l'invention, le moyen de retenue comporte :
- au moins un poussoir solidaire du bras, et
- au moins un taquet monté sur le support,
le poussoir étant en butée contre le taquet dans l'état bloqué et le taquet étant déformable élastiquement sous l'effet d'un effort transmis au taquet par le poussoir de manière à se déformer jusqu'à libérer le poussoir de la butée pour atteindre l'état libre. Un tel moyen de retenue permet d'utiliser l'effort issu d'un choc, notamment avec un piéton, pour atteindre l'état libre et ainsi positionner le boîtier électronique en position escamotée, évitant ainsi de blesser le piéton avec le dispositif de détection ou de communication.

Selon une réalisation de l'invention, le moyen de retenue comporte deux poussoirs et deux taquets dont un premier poussoir associé à un premier taquet et un deuxième poussoir associé à un deuxième taquet. Cette réalisation à deux taquets permet notamment une configuration symétrique favorisant un comportement prévisible en cas de choc notamment dans le cas d'un choc légèrement déporté sur un côté du véhicule. La présence de deux taquets plutôt qu'un seul permet également de renforcer la raideur du dispositif de détection ou de communication.

Selon une réalisation, le comportement des deux taquets est synchronisé. Par exemple, le premier poussoir et le deuxième poussoir sont solidaires d'un même bras et exercent donc un effort simultanément sur les deux taquets. Ceci permet de limiter le risque que les deux taquets ne libèrent pas simultanément les poussoirs et compromettent un escamotage franc du boîtier électronique.

Selon une réalisation particulière de l'invention, les deux poussoirs sont libérés simultanément sous l'effet d'un même effort.

Selon une réalisation de l'invention, le système d'articulation comporte en outre au moins un arrêt bornant la course du boîtier électronique dans la position déployée. Un tel arrêt permet notamment de maintenir le dispositif en position déployée en empêchant son déplacement dans un sens opposé au sens d'escamotage.

L'invention concerne également un véhicule comportant un dispositif de détection ou de communication selon ce qui précède.

### 5. Liste des figures

D'autres caractéristiques et avantages innovants ressortiront de la description ci-après, fournie à titre indicatif et nullement limitatif, en référence aux dessins annexés, dans lesquels :
- La figure 1 représente une vue schématique en perspective d'une portion avant d'un véhicule selon un mode de réalisation de l'invention ;
- Les figures 2a et 2b représentent chacune une vue partielle en coupe longitudinale de la portion avant du véhicule de la figure 1 comportant un dispositif de détection ou de communication avec un boîtier électronique respectivement en position déployée et en position escamotée ;
- La figure 3 représente une vue en perspective de côté d'un dispositif de détection ou de communication avec un boîtier électronique en position déployée selon un mode de réalisation de l'invention,
- La figure 4 représente une vue en perspective de dessous du dispositif de détection ou de communication de la figure 3 en position déployée du boîtier électronique,
- La figure 5 représente une vue partielle en perspective de dessous du dispositif de détection ou de communication des figures 3 et 4,
- Les figures 6a à 6c montrent la cinématique en perspective et de dessus du dispositif de la figure 5 entre la position déployée et la position escamotée du boîtier électronique, et
- Les figures 7a à 7c montrent la cinématique en perspective et de dessous du dispositif de la figure 5 entre la position déployée et la position escamotée du boîtier électronique.

### 6. Description détaillée

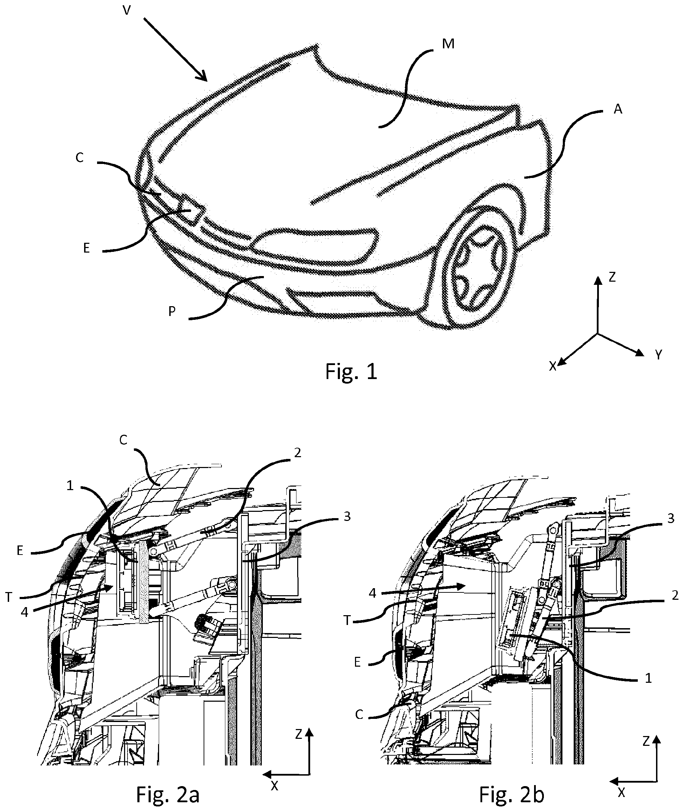

Les figures 1 à 6c sont orientées suivant un axe longitudinal X pointant vers l'avant, un axe transversal Y pointant vers la gauche et un axe vertical Z pointant vers le haut.

La figure 1 illustre un exemple de portion avant de véhicule automobile V. Le véhicule automobile V comporte une carrosserie comprenant deux ailes A, un capot moteur M, un pare-chocs P et une calandre C présentant un orifice traversant portant l'enseigne E du constructeur automobile. Classiquement, les ailes A, le capot moteur M, le pare-chocs P et la calandre C sont entièrement ou partiellement métalliques. Or, les éléments métalliques ont la propriété d'être pratiquement imperméables aux ondes électromagnétiques. Par conséquent, les dispositifs de détection ou de communication du type radar, fonctionnant avec l'émission et la réception d'ondes électromagnétiques, sont équipés d'antennes d'émission et de réception situées à proximité de l'extérieur de la carrosserie, dans une ouverture de la carrosserie ou derrière un cache spécifiquement conçu pour être transparent à la longueur d'onde utilisée.

Afin de permettre l'émission et la réception de signaux vers l'avant du véhicule notamment pour des fonctions de régulation de vitesse associée à une régulation de distance, de freinage d'urgence ou d'évitement de collision, un dispositif de détection ou de communication de type radar est placé dans une cavité située derrière l'enseigne E. Pour une question esthétique et pour protéger l'accès au dispositif de détection ou de communication, l'enseigne E comporte classiquement un cache T transparent à la longueur d'onde utilisée comme représenté aux figures 2a et 2b.

Le dispositif de détection ou de communication comporte un boîtier électronique 1 contenant le système électronique et en particulier l'antenne du dispositif de détection ou de communication. Le dispositif de détection ou de communication comporte également un système d'articulation 2 articulant le boîtier électronique 1 sur la caisse 3 du véhicule entre une position déployée illustrée à la figure 2a et une position escamotée illustrée à la figure 2b. En fonctionnement, le boîtier électronique est en position déployée, c'est-à-dire que le boîtier électronique 1 est positionné immédiatement derrière le cache T dans un espace 4 dédié à l'émission et à la réception de signaux de détection ou de communication. Dans certaines circonstances, par exemple en cas de choc, le boîtier électronique est placé en position escamotée, c'est-à-dire que le boîtier électronique 1 est écarté de l'espace 4 dédié pour être placé dans une portion de la cavité située derrière l'enseigne E suffisamment éloignée de la carrosserie pour éviter que le boîtier électronique ne constitue un point dur en cas de choc avec un piéton.

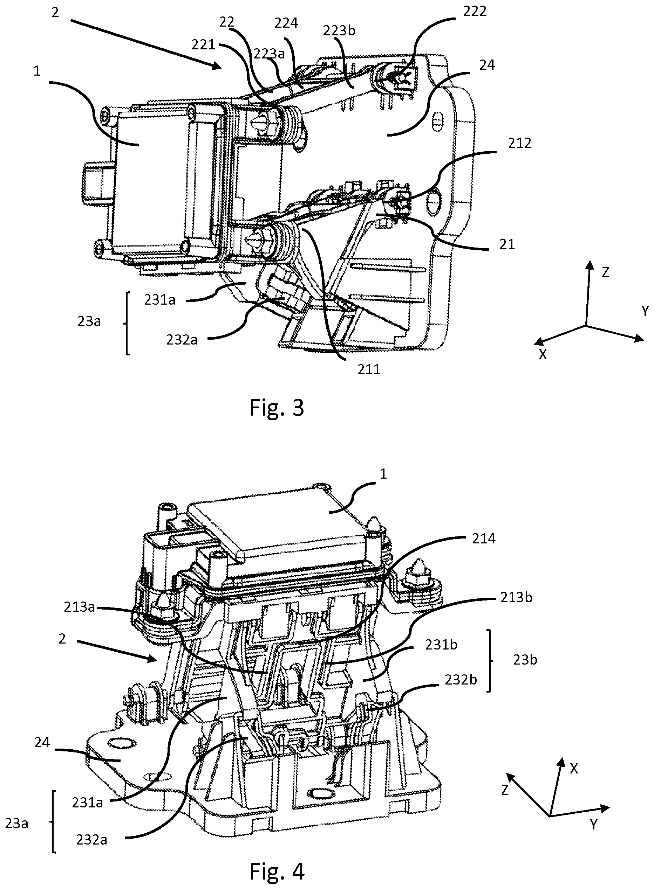

En référence aux figures 3 et 4, le système d'articulation 2 comporte un support 24, deux bras dont un bras inférieur 21 et un bras supérieur 22 ainsi qu'un moyen de retenue comportant deux ensembles dont un premier ensemble 23a situé à droite du bras inférieur 21 et un deuxième ensemble 23b situé à gauche du bras inférieur 21.

Le support 24 est destiné à être monté sur la caisse, par exemple en étant collé, soudé ou fixé par un système de vis/écrou.

Le bras supérieur 22 est constitué de deux montants dont un montant à droite 223a et un montant à gauche 223b, les montants étant reliés entre eux par une ou plusieurs traverses 224.

Le bras supérieur 22 comporte une première extrémité 221 montée sur le boîtier électronique 1 du dispositif de détection ou de communication et une deuxième extrémité 222 montée mobile sur le support 24 de manière à guider le boîtier électronique 1 entre la position déployée et la position escamotée. La première extrémité 221 est par exemple en liaison pivot ou en liaison rotule avec le boîtier électronique 1. La deuxième extrémité 222 est par exemple en liaison pivot ou en liaison rotule avec le support 24.

Le bras inférieur 21 est constitué de deux montants dont un montant à droite 213a et un montant à gauche 213b, les montants étant reliés entre eux par une ou plusieurs traverses 214.

Le bras inférieur 21 comporte une première extrémité 211 montée sur le boîtier électronique 1 du dispositif de détection ou de communication et une deuxième extrémité 212 montée mobile sur le support 24 de manière à guider le boîtier électronique 1 entre la position déployée et la position escamotée. La première extrémité 211 est par exemple en liaison pivot ou en liaison rotule avec le boîtier électronique 1. La deuxième extrémité 212 est par exemple en liaison pivot ou en liaison rotule avec le support 24.

Le système d'articulation 2 ainsi constitué est de type trapézoïdal déformable, le boîtier électronique 1 du système de détection ou de communication et le support 24 s'étendant respectivement dans des directions parallèles matérialisant deux côtés du trapèze, les deux bras 21 et 22 matérialisant les deux autres côtés.

Chaque bras s'étend en largeur de part et d'autre du boîtier électronique selon une direction perpendiculaire au plan du trapèze correspondant à la direction transversale. Ainsi, la première extrémité 221 du bras supérieur s'étend sur toute une portion supérieure du boîtier électronique 1 et la première extrémité 211 du bras inférieur s'étend sur toute une portion inférieure du boîtier électronique 1. Dans l'exemple illustré, le boîtier électronique 1 a une forme parallélépipédique de section transversale sensiblement carrée dont chaque coin se prolonge en une patte. Les deux pattes supérieures sont fixées à une pièce intermédiaire en liaison pivot avec la première extrémité 221 du bras supérieur et les deux pattes inférieures sont fixées à la pièce intermédiaire en liaison pivot avec la première extrémité 211 du bras inférieur. Ainsi, la première extrémité 221 du bras supérieur et la première extrémité 211 du bras inférieur sont articulées e rotation respectivement en deux points distants du boîtier électronique 1. De même, la deuxième extrémité 222 du bras supérieur et la deuxième extrémité 212 du bras inférieur sont articulées en rotation respectivement en deux points distants du support 24. Une telle répartition des articulations permet de conférer une raideur garantissant la robustesse du dispositif. Le bras supérieur 22 et le bras inférieur 21 comportent des évidements permettant notamment d'alléger leur structure.

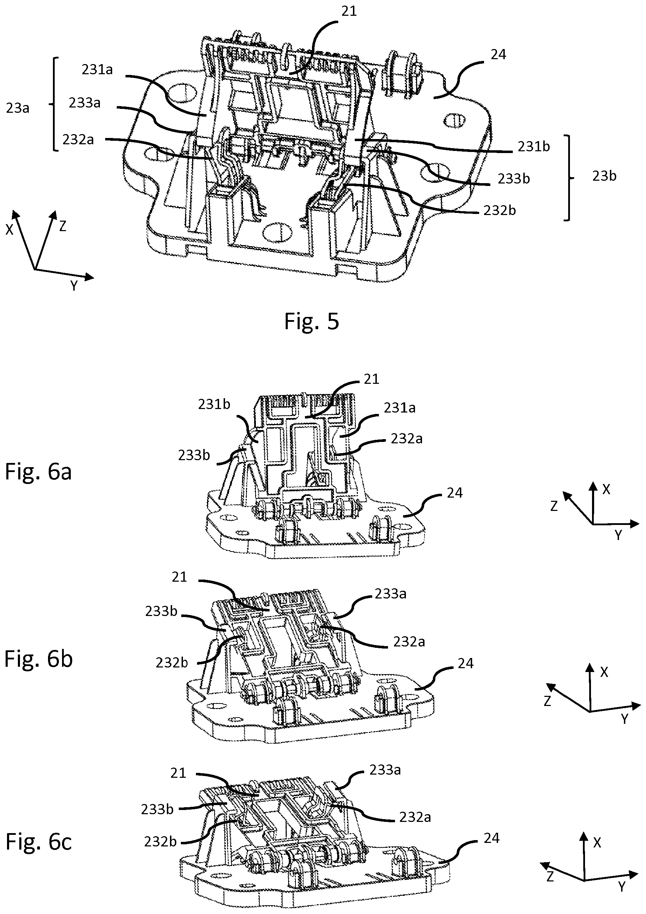

Le moyen de retenue présente un état bloqué représenté dans les figures 2a, 3 à 5 et 6a et un état libre représenté dans les figures 2b, 6b et 6c. Dans l'état bloqué, le boîtier électronique 1 est maintenu en position déployée tandis que dans l'état libre, le boîtier électronique 1 est libre de passer de la position déployée à la position escamotée. Le moyen de retenue est déformable élastiquement de manière à se déformer entre l'état bloqué et l'état libre. Dans le mode de réalisation représenté, le moyen de retenue adopte une forme au repos dans l'état bloqué et dans l'état libre et s'écarte de la forme au repos lors du passage entre l'état libre et l'état bloqué.

Selon une variante non représentée, le moyen de retenue adopte la forme au repos dans l'un des deux états bloqué ou libre et s'écarte de la forme au repos dans l'autre état.

Plus particulièrement, le premier ensemble 23a du moyen de retenue comporte un poussoir 231a solidaire du bras inférieur 21, un taquet 232a et un arrêt 233a montés sur le support 24.

Le taquet 232a est par exemple une languette coudée s'emboîtant dans un emplacement dédié dans le support 24. Le taquet est constitué au moins localement de matériaux déformables élastiquement c'est-à-dire capables de se déformer dans leur domaine d'élasticité autour d'une forme au repos, à l'instar d'un ressort. Ces matériaux peuvent être par exemple des métaux ou des polymères de type caoutchouc.

Le poussoir 231a est une excroissance d'une portion à droite du bras inférieur. L'excroissance a par exemple la forme d'un secteur circulaire dont l'angle pointe vers la deuxième extrémité 212 du bras inférieur. L'excroissance comporte une arrête supérieure située dans l'axe du bras et une arrête inférieure en saillie d'une portion inférieure du bras. Dans l'état bloqué, le poussoir est en butée contre le taquet. Par exemple l'arrête inférieure du poussoir repose sur la portion coudée du taquet.

L'arrêt 233a borne la course du boîtier électronique 1 entre la position déployée et la position rétractée. L'arrêt est par exemple un crochet formé de matière avec le support 24 agencé pour entrer en butée avec une portion du bras inférieur 21 en position déployée.

De manière analogue à ce qui a été décrit pour le premier ensemble 23a, le deuxième ensemble 23b du moyen de retenue comporte un poussoir 231b solidaire du bras inférieur 21, un taquet 232b et un arrêt 233b montés sur le support 24.

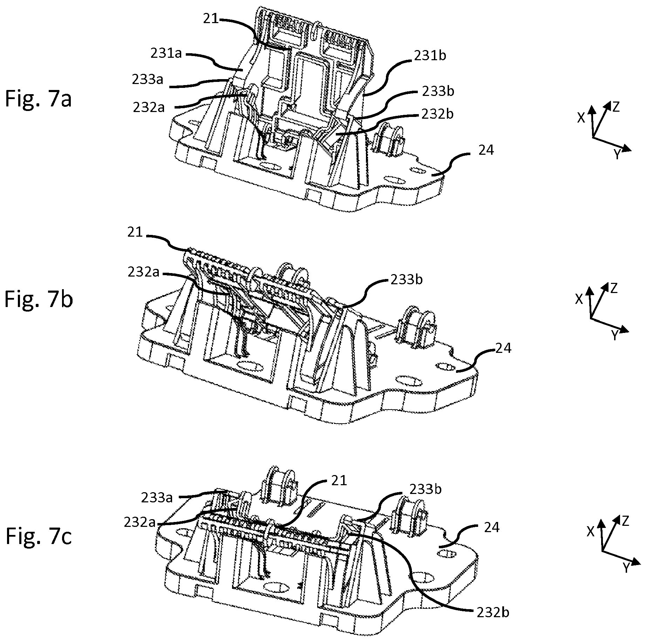

Les figures 6a à 6c et 7a à 7c illustrent le passage de la position déployée à la position rétractée. Lorsqu'un effort est exercé sur le boîtier électronique 1, par exemple lors d'un choc, l'effort est transmis aux poussoirs 231a et 231b par l'intermédiaire du bras inférieur 21. Les poussoirs 231a et 231b transmettent à leur tour l'effort aux taquets qui sont alors mis sous contrainte de manière à se déformer élastiquement jusqu'à libérer les poussoirs de leur butée pour atteindre l'état libre.

Les poussoirs étant libérés de leur butée, le système d'articulation 2 se déforme sous l'effet de la pesanteur selon un mouvement de translation circulaire jusqu'à atteindre promptement la position rétractée.

Selon des variantes non représentées :
- le ou les poussoirs se situent sur le bras supérieur,
- le système d'articulation comporte un seul bras,
- le moyen de retenue comporte un seul ensemble,
- le moyen de retenue comporte simplement une excroissance dans le support ou dans un bras réalisant un point dur dans la course entre la position déployée et la position rétractée, le point dur pouvant être passé grâce à la déformation élastique du support ou du bras,
- le système d'articulation ne comporte pas de support et le ou les bras sont en liaison direct avec la caisse du véhicule,
- le ou les bras sont montés coulissants ou en liaison rotule avec la caisse ou le support.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l'invention.

## Revendications

1. Dispositif de détection ou de communication comportant un boîtier électronique (1) et un système d'articulation (2) du boîtier électronique (1) sur une caisse (3) de véhicule entre une position déployée, dans laquelle le boîtier électronique (1) est placé dans un espace (4) dédié à l'émission et la réception de signaux de détection ou de communication, et une position escamotée, dans laquelle le boîtier électronique (1) est écarté de l'espace (4) dédié, le système d'articulation (2) comportant :
- deux bras (21, 22) comportant chacun une première extrémité (211, 221) montée articulée en rotation sur le boîtier électronique (1) et une deuxième extrémité (212, 222) : susceptible d'être montée mobile en rotation sur la caisse (3) de manière à guider le boîtier électronique (1) entre la position déployée et la position escamotée, les premières extrémités (211, 221) des deux bras étant distantes et articulées respectivement en deux points du boîtier électronique (1), les deuxièmes extrémités (212, 222) des deux bras étant distantes et susceptibles d'être articulées respectivement en deux points de la caisse (3), le dispositif de détection ou de communication étant **caractérisé en ce que** le système d'articulation comporte
- un moyen de retenue (23a, 23b) présentant un état bloqué, dans lequel le boîtier électronique (1) est maintenu en position déployée, et un état libre dans lequel le boîtier électronique (1) est libre de passer de la position déployée à la position escamotée, le moyen de retenue (23a, 23b) étant déformable élastiquement de manière à se déformer entre l'état bloqué et l'état libre.

2. Dispositif de détection ou de communication selon la revendication 1 **caractérisé en ce que** dans l'état libre, le boîtier passe promptement de l'état déployé à l'état escamoté.

3. Dispositif de détection ou de communication selon l'une quelconque des revendications précédentes **caractérisé en ce que** le moyen de retenue passe de l'état bloqué à l'état libre sous l'effet d'un effort prédéterminé par la nature du matériau constituant moyen le de retenue (23a, 23b).

4. Dispositif de détection ou de communication selon l'une quelconque des revendications précédentes **caractérisé en ce que**, une fois le boîtier en position escamotée, le système d'articulation est apte à être réarmé de manière à replacer le boîtier en position déployée, le changement entre la position escamotée et la position déployée n'altérant pas le dispositif.

5. Dispositif de détection ou de communication selon l'une quelconque des revendications précédentes, **caractérisé en ce qu'**au moins un bras comporte deux montants latéraux reliés entre eux par au moins une traverse.

6. Dispositif de détection ou de communication selon l'une quelconque des revendications précédentes, **caractérisé en ce que** la deuxième extrémité (212, 222) du bras (21, 22) est montée mobile en rotation sur un support (24) destiné à être monté sur la caisse la caisse (3).

7. Dispositif de détection ou de communication selon l'une quelconque des revendications précédentes **caractérisé en ce que** le dispositif d'articulation (2) est de type à parallélogramme ou trapézoïdal en position déployée, le boîtier électronique (1) et la caisse (3) s'étendant respectivement dans des directions sensiblement parallèles matérialisant deux côtés du parallélogramme ou du trapèze, les deux bras (21, 22) matérialisant les deux autres côtés.

8. Dispositif de détection ou de communication selon l'une quelconque des revendications précédentes, **caractérisé en ce que** le dispositif d'articulation (2) en position escamotée comporte une extrémité du bras (22) proche du boîtier électronique (1) amenée contre le boîtier électronique (1) de façon à amener le boîtier électronique (1) à proximité d'une extrémité du bras (21) proche de la caisse (3).

9. Dispositif de détection ou de communication selon l'une quelconque des revendications précédentes, **caractérisé en ce que** le système d'articulation (2) comporte en outre un support (24) par l'intermédiaire duquel la deuxième extrémité (212, 222) du bras est montée mobile sur la caisse (3).

10. Dispositif de détection ou de communication selon la revendication 9 **caractérisé en ce que** le moyen de retenue (23a, 23b) comporte :
- au moins un poussoir (231a, 231b) solidaire du bras (21, 22), et
- au moins un taquet (232a, 232b) monté sur le support (24),
le poussoir (231a, 231b) étant en butée contre le taquet (232a, 232b) dans l'état bloqué et le taquet étant déformable élastiquement sous l'effet d'un effort transmis au taquet (232a, 232b) par le poussoir (231a, 231b) de manière à se déformer jusqu'à libérer le poussoir (231a, 231b) de la butée pour atteindre l'état libre.

11. Dispositif de détection ou de communication selon la revendication 10 **caractérisé en ce que** le moyen de retenue (23a, 23b) comporte deux poussoirs (231a, 231b) et deux taquets (232a, 232b) dont un premier poussoir (231a) associé à un premier taquet (232a) et un deuxième poussoir (231b) associé à un deuxième taquet(232b).

12. Dispositif de détection ou de communication selon la revendication 11, **caractérisé en ce que** les deux poussoirs (231a, 231b) sont libérés simultanément sous l'effet d'un même effort.

13. Dispositif de détection ou de communication selon l'une quelconque des revendications précédentes, **caractérisé en ce que** le système d'articulation (2) comporte en outre au moins un arrêt (233a, 233b) bornant la course du boîtier électronique (1) dans la position déployée.

14. Véhicule **caractérisé en ce qu'**il comporte un dispositif de détection ou de communication selon l'une quelconque des revendications précédentes.

## Patentansprüche

1. Detektions- oder Kommunikationsvorrichtung, welche ein Elektronikgehäuse (1) aufweist, und ein System zur Anlenkung (2) des Elektronikgehäuses (1) an einer Karosserie (3) eines Fahrzeugs, so dass es zwischen einer ausgefahrenen Position, in welcher das Elektronikgehäuse (1) in einem Raum (4) positioniert ist, der für das Senden und den Empfang von Detektions- oder Kommunikationssignalen vorgesehen ist, und einer eingefahrenen Position, in welcher das Elektronikgehäuse (1) von dem vorgesehenen Raum (4) entfernt ist, bewegbar ist, wobei das Anlenksystem (2) aufweist:
- zwei Arme (21, 22), die jeweils ein erstes Ende (211, 221), das drehbar an dem Elektronikgehäuse (1) angelenkt ist, und ein zweites Ende (212, 222), das drehbeweglich an der Karosserie (3) befestigbar ist, aufweisen, um das Elektronikgehäuse (1) zwischen der ausgefahrenen Position und der eingefahrenen Position zu führen, wobei die ersten Enden (211, 221) der zwei Arme voneinander entfernt und an zwei Punkten des Elektronikgehäuses (1) angelenkt sind, wobei die zweiten Enden (212, 222) der zwei Arme voneinander entfernt und jeweils an zwei Punkten der Karosserie (3) anlenkbar sind, wobei die Detektions- oder Kommunikationsvorrichtung **dadurch gekennzeichnet ist, dass** das Anlenksystem aufweist:
- ein Haltemittel (23a, 23b), das einen blockierten Zustand aufweist, in welchem das Elektronikgehäuse (1) in der ausgefahrenen Position gehalten wird, und einen freien Zustand, in welchem sich das Elektronikgehäuse (1) frei von der ausgefahrenen Position in die eingefahrene Position bewegen kann, wobei das Haltemittel (23a, 23b) elastisch verformbar ist, so dass es sich zwischen dem blockierten Zustand und dem freien Zustand verformt.

2. Detektions- oder Kommunikationsvorrichtung nach Anspruch 1, **dadurch gekennzeichnet, dass** das Gehäuse im freien Zustand sofort von dem ausgefahrenen Zustand in den eingefahrenen Zustand übergeht.

3. Detektions- oder Kommunikationsvorrichtung nach einem der vorhergehenden Ansprüche, **dadurch gekennzeichnet, dass** das Haltemittel unter der Einwirkung einer Kraft vom blockierten Zustand in den freien Zustand übergeht, die durch die Art des Materials vorbestimmt wird, aus dem das Haltemittel (23a, 23b) besteht.

4. Detektions- oder Kommunikationsvorrichtung nach einem der vorhergehenden Ansprüche, **dadurch gekennzeichnet, dass**, sobald sich das Gehäuse in der eingefahrenen Position befindet, das Anlenksystem wieder zurückgestellt werden kann, um das Gehäuse wieder in die ausgefahrene Position zu bringen, wobei der Wechsel zwischen der eingefahrenen Position und der ausgefahrenen Position die Vorrichtung nicht verändert.

5. Detektions- oder Kommunikationsvorrichtung nach einem der vorhergehenden Ansprüche, **dadurch gekennzeichnet, dass** wenigstens ein Arm zwei seitliche Holme aufweist, die durch wenigstens eine Querstrebe miteinander verbunden sind.

6. Detektions- oder Kommunikationsvorrichtung nach einem der vorhergehenden Ansprüche, **dadurch gekennzeichnet, dass** das zweite Ende (212, 222) des Armes (21, 22) drehbeweglich an einem Träger (24) gelagert ist, der dazu bestimmt ist, an der Karosserie (3) angebracht zu werden.

7. Detektions- oder Kommunikationsvorrichtung nach einem der vorhergehenden Ansprüche, **dadurch gekennzeichnet, dass** die Anlenkvorrichtung (2) in der ausgefahrenen Position von einem parallelogrammförmigen oder trapezförmigen Typ ist, wobei sich das Elektronikgehäuse (1) und die Karosserie (3) jeweils in im Wesentlichen parallelen Richtungen erstrecken, welche zwei Seiten des Parallelogramms oder des Trapezes verkörpern, wobei die zwei Arme (21, 22) die beiden anderen Seiten verkörpern.

8. Detektions- oder Kommunikationsvorrichtung nach einem der vorhergehenden Ansprüche, **dadurch gekennzeichnet, dass** die Anlenkvorrichtung (2) in der eingefahrenen Position ein dem Elektronikgehäuse (1) nahes Ende des Armes (22) aufweist, das so gegen das Elektronikgehäuse (1) bewegt wird, dass das Elektronikgehäuse (1) in die Nähe eines der Karosserie (3) nahen Endes des Armes (21) gebracht wird.

9. Detektions- oder Kommunikationsvorrichtung nach einem der vorhergehenden Ansprüche, **dadurch gekennzeichnet, dass** das Anlenksystem (2) außerdem einen Träger (24) aufweist, über welchen das zweite Ende (212, 222) des Armes beweglich an der Karosserie (3) angebracht ist.

10. Detektions- oder Kommunikationsvorrichtung nach Anspruch 9, **dadurch gekennzeichnet, dass** das Haltemittel (23a, 23b) aufweist:
- wenigstens einen Stößel (231a, 231b), der mit dem Arm (21, 22) fest verbunden ist, und
- wenigstens eine Nase (232a, 232b), die auf dem Träger (24) angebracht ist,
wobei der Stößel (231a, 231b) im blockierten Zustand an der Nase (232a, 232b) anliegt und die Nase unter der Einwirkung einer Kraft, die durch den Stößel (231a, 231b) auf die Nase (232a, 232b) übertragen wird, so elastisch verformbar ist, dass sie sich verformt, bis sie den Stößel (231a, 231b) aus der anliegenden Position freigibt, um den freien Zustand zu erreichen.

11. Detektions- oder Kommunikationsvorrichtung nach Anspruch 10, **dadurch gekennzeichnet, dass** das Haltemittel (23a, 23b) zwei Stößel (231a, 231b) und zwei Nasen (232a, 232b) aufweist, von denen ein erster Stößel (231a) einer ersten Nase (232a) zugeordnet ist und ein zweiter Stößel (231b) einer zweiten Nase (232b) zugeordnet ist.

12. Detektions- oder Kommunikationsvorrichtung nach Anspruch 11, **dadurch gekennzeichnet, dass** die zwei Stößel (231a, 231b) unter der Einwirkung ein und derselben Kraft gleichzeitig freigegeben werden.

13. Detektions- oder Kommunikationsvorrichtung nach einem der vorhergehenden Ansprüche, **dadurch gekennzeichnet, dass** das Anlenksystem (2) außerdem wenigstens einen Anschlag (233a, 233b) aufweist, der den Weg des Elektronikgehäuses (1) in der ausgefahrenen Position begrenzt.

14. Fahrzeug, **dadurch gekennzeichnet, dass** es eine Detektions- oder Kommunikationsvorrichtung nach einem der vorhergehenden Ansprüche aufweist.

## Claims

1. Detection or communication device comprising an electronic housing (1) and an articulation system (2) for articulating the electronic housing (1) on a body (3) of a vehicle between a deployed position, in which the electronic housing (1) is placed in a space (4) dedicated to the transmission and the reception of detection or communication signals, and a retracted position, in which the electronic housing (1) is separated from the dedicated space (4), the articulation system (2) comprising:
- two arms (21, 22) each comprising a first end (211, 221) mounted rotationally articulated on the electronic housing (1) and a second end (212, 222) that can be mounted to be rotationally mobile on the body (3) so as to guide the electronic housing (1) between the deployed position and the retracted position, the first ends (211, 221) of the two arms being distant and articulated respectively at two points of the electronic housing (1), the second ends (212, 222) of the two arms being distant and capable of being articulated respectively at two points of the body (3), the detection or communication device being **characterized in that** the articulation system comprises
- a retaining means (23a, 23b) that has a blocked state, in which the electronic housing (1) is held in deployed position, and a free state in which the electronic housing (1) is free to pass from the deployed position to the retracted position, the retaining means (23a, 23b) being elastically deformable so as to be deformed between the blocked state and the free state.

2. Detection or communication device according to Claim 1, **characterized in that**, in the free state, the housing passes promptly from the deployed state to the retracted state.

3. Detection or communication device according to either one of the preceding claims, **characterized in that** the retaining means passes from the blocked state to the free state under the effect of an effort that is predetermined by the nature of the material constituting the retaining means (23a, 23b).

4. Detection or communication device according to any one of the preceding claims, **characterized in that**, once the housing is in retracted position, the articulation system can be rearmed so as to return the housing to deployed position, the change between the retracted position and the deployed position not affecting the device.

5. Detection or communication device according to any one of the preceding claims, **characterized in that** at least one arm comprises two lateral uprights linked to one another by at least one crossmember.

6. Detection or communication device according to any one of the preceding claims, **characterized in that** the second end (212, 222) of the arm (21, 22) is mounted to be rotationally mobile on a support (24) intended to be mounted on the body (3).

7. Detection or communication device according to any one of the preceding claims, **characterized in that** the articulation device (2) is of the parallelogram or trapezoidal type in deployed position, the electronic housing (1) and the body (3) extending respectively in substantially parallel directions embodying two sides of the parallelogram or of the trapezium, the two arms (21, 22) embodying the other two sides.

8. Detection or communication device according to any one of the preceding claims, **characterized in that** the articulation device (2) in retracted position comprises an end of the arm (22) close to the electronic housing (1) brought against the electronic housing (1) so as to bring the electronic housing (1) into proximity with an end of the arm (21) close to the body (3).

9. Detection or communication device according to any one of the preceding claims, **characterized in that** the articulation system (2) further comprises a support (24) via which the second end (212, 222) of the arm is mounted to be mobile on the body (3).

10. Detection or communication device according to Claim 9, **characterized in that** the retaining means (23a, 23b) comprises:
- at least one push-piece (231a, 231b) secured to the arm (21, 22), and
- at least one latch (232a, 232b) mounted on the support (24),
the push-piece (231a, 231b) being in abutment against the latch (232a, 232b) in the blocked state and the latch being elastically deformable under the effect of an effort transmitted to the latch (232a, 232b) by the push-piece (231a, 231b) so as to be deformed until the push-piece (231a, 231b) is released from the abutment to obtain the free state.

11. Detection or communication device according to Claim 10, **characterized in that** the retaining means (23a, 23b) comprises two push-pieces (231a, 231b) and two latches (232a, 232b), including a first push-piece (231a) associated with a first latch (232a) and a second push-piece (231b) associated with a second latch (232b).

12. Detection or communication device according to Claim 11, **characterized in that** the two push-pieces (231a, 231b) are released simultaneously under the effect of the same effort.

13. Detection or communication device according to any one of the preceding claims, **characterized in that** the articulation system (2) further comprises at least one stop (233a, 233b) limiting the travel of the electronic housing (1) in the deployed position.

14. Vehicle, **characterized in that** it comprises a detection or communication device according to any one of the preceding claims.
